# EUROPEAN PATENT SPECIFICATION

(11) **EP 0 443 300 B1**
(45) Date of publication and mention of the grant of the patent: **12.01.1994**
(21) Application number: 90830485.0
(22) Date of filing: 29.10.1990
(51) Int. Cl.: F16K 3/08, F16K 47/02

(54) **Pair of cooperating disks to control the delivery of liquid in so-called screw type valves**
Zusammenarbeitendes Scheibenpaar zum Regeln der Flüssigkeitsabgabe bei einem Einschraubventil
Paires de disques coopérant pour le contrôle du débit d'un liquide dans une vanne à visser

(30) Priority: 08.11.1989 IT 710689 U
(43) Date of publication of application: 28.08.1991
(73) Proprietor: GALATRON S.r.l., I-46043 Castiglione d/Stiviere (Mantova) (IT)
(72) Inventor: Orlandi, Alessio, I-46043 Castiglione d/Stiviere (Mantova) (IT)
(74) Representative: Manzoni, Alessandro

(56) References cited:
- CH-A- 649 822
- DE-A- 3 217 737
- DE-A- 3 533 657
- GB-A- 2 173 577
- US-A- 3 807 455
- US-A- 4 821 765

## Description

The present invention relates to sealing and control means for the delivery of liquid in valves for sanitary systems, especially in screw type valves with disks in ceramic or similar materials.
Valves of this type are known, for example, from documents US-A-4, 821.765 and GB-A-2, 173,577. These documents disclose a removable cartridge type valve which has a valve body having lateral slots, a control rod having a handle, a pair of overlapping disks positioned in the valve body for regulating fluid flow through the valve in response to rotation of one disk over the other disk. In fact, a first of said disks is fixed inside the valve body and has two segment like slots,the second of said disks is movable and rotates onto said first disk and has lateral openings which are open both at the bottom towards the fixed disk and radiaily towards the lateral slots of the valve body.
In the embodiment described in US-A-4.821,765, the control rod is directly connected to the movable disk, while in the embodiment dislosed in GB-A-2,173,577, the control rod is connected to the movable disk through an intermediate entrainer which has a central tab only that can be inserted into a recess arranged diametrically with respect to the top of the movable disk.
In both documents, the lateral openings of the movable disk are L-shaped with a curved surface at the corner of the two square sides of the "L", which negatively affect the rate of flow and keeps the noise level high.
Moreover, although an entrainer between the control rod and the movable disk is envisaged, as in GB-A-217,577,there are no seals between the elements so coupled.
On the basis of this preliminary statement, the object of this invention is to provide a so-called screw-type valve incorporating a pair of disks made of ceramics or other similar material, which have a new configuration at least as regards the lateral openings of the movable disk, to improve fluid outflow, reduce noise level and increase the rate of flow with respect to disks of the same dimensions. The adoption of these disks also makes it possibile to locate a seal above moving disk, at a certain distance in a point where the working temperature is reduced by the entrainer connected to the movable disk.
Moreover, for connection to the movable disk, the entrainer has two lateral tabs in addition to a central tab, which engage the movable disk, said lateral tabs having a curved head surface in continuation to a top surface of the corresponding openings of the movable disk.
In addition the movable disk, or more precisely openings thereof,can be fitted with notches which interrupt the flow and reduce the noise of the delivered liquid without loss of the flow capacity.
To this purpose, the present invention relates to a valve according to the preamble of claim 1 (as is e.g.Known from GB-A-2, 173,577) and characterized in that:
- each lateral opening of the movable disk is defined at the top by a curved or parabolic surface rising from the base approximately at the centre of the movable disk up to the periphery of the same disk;
- a seal is fitted between the entrainer and the control rod; and
- entrainer has two lateral tabs and a central tab which engage the movable disk, at least one of said lateral tabs having a curved head surface in continuation to the top surface of said lateral opening.

An example of practical realization of the invention will be described below in more detail, with references being made to the attached drawing in which:
- Figure 1: is a partial axial section view of the screw type valve with a 90° rotation opening of closing defined by internal limiting devices;
- Figure 2: is a sectional view of the movable disk on the lines II-II in figure 1;
- Figure 3: is a perspective view of the disks and the entrainer;
- Figure 4: is a part of the valve with notches which interrupt the flow;
- Figure 5: is a pair of disks for screw type valves with a 180° opening and closing rotation; and
- Figure 6: is a screw type valve like the one in figure 1, but with rotation limiting devices on the outside of its body.

Said drawing shows the two overlapping disks (11,12) which are incorporated inside a valve body (13 which is designed to be coordinated for screwing, and has peripheral seals (13b) interpositioned in taps for sanitary systems, in line with a water delivery conduit. The valve body (13 has flow outlet radial slots (13a), and the disks (11,12) are at the same level of said slots, and comprise a lower fixed disk (11) and an upper one (12) which rotates on top of the fixed one.

In more detail, the fixed disk is splined to a disk-holder ring (14) which is hooked to the lower part of the valve body (13). This ring has notched tabs (14a) engaged with shoulders cut into said valve body. The fixed disk (11) rests on the ring (14) with the interposition of a seal (14b); a basic annular seal (15) for the sealing of the water inlet is fitted to the bottom of the ring (14).

The upper movable disk (12) is splined to art entrainer (16) which is, in turn, splined to the lower end of a control rod (17). The top of the control rod (17) is partially broached and equipped with a control handle (not shown). The entrainer (16) has two lateral tabs (16a) and a central tab (16b) which are all parallel to each other and designed to engage the movable disk (12) as in the drawing. In turn, the rod (17) has a lower placed tab (17a) engaged in a straight or crossed slot (17c) cut into the entrainer (16). Furthermore, the rod (17) is rotated inside the valve body (13) with the interposition of seals (18,18') and an anti-friction ring (19) all at different levels.

A seal (20) can also be placed between the entrainer (16) and the control rod (17). This seal (20) is not in contact with the movable disk (12) and therefore works at a lower temperature than said disk.

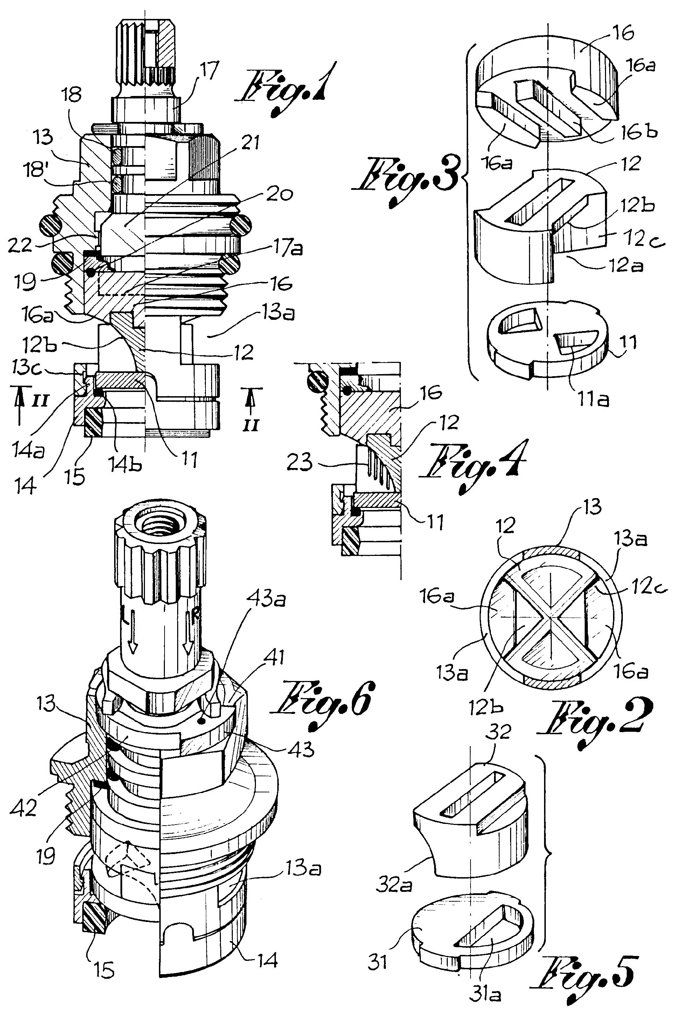

In a screw valve with a 90° opening and closing rotation (figs. 1 and 3) the fixed disk has two segment like slots (11a), closed at the perimeter whereas the movable disk (12) has two openings (12a) which are open both at the bottom towards the fixed disk (11) and radially towards the slots (13a) of the valve body (13), but closed at the top towards the entrainer (16). The angular amplitude of the openings (12a) of the movable disk (12) is similar to the amplitude of the slots (11a) of the fixed disk (11), but nevertheless smaller than the spaces between said slots (11a) of the fixed disk. Seen from below, the movable disk (12) has an "X" shape which is made up of two openings (12a) which alternate with two solid parts, lateral flattenings (12c) being cut in correspondance of said openings. In each case, the top of both openings (12a) are defined by a spherical or parabolic surface which rises from the bottom, more or less in the centre of the disk, towards the perimeter where it joins the surface of the entrainer above (16) which also has curved lateral tabs (16a). The surface more or less reaches the top of the radial slots (13a) of the body (13). The rod has at least one lateral shoulder (21) which operates together with a blocking notch (22) integral with the body so as to limit the rotation of the rod (17) to 90° and so as to position the openings of the movable disk in correspondence with or away from the ones of the fixed disk.

Tests have proven that this configuration of the disks, especially the movable one (12), allows an improved flow of liquid and a greater flow capacity with respect to known realizations under the same conditions.

In a screw type valve with a 180° opening and closing rotation as in Fig. 5 of the drawing, the fixed disk (31) has only one semi-circular slot (31a) and the movable disk (32) only one lateral opening (32a) with a spoked top and joint to a corresponding lateral tab of the entainer in a similar way to that which has been described above. Some appropriate parts will be fitted on the control rod so as to limit the rotation of the movable disk (32).

In both cases, the parts which will limit the rotation of the control rod (17) can be fitted onto the outside of the body (13), at the top. These parts therefore comprise (Fig. 6) two shoulders (41) which are angularly spaced and cut into the top of the body (13) and a ring (42) splined and rotating with the rod (17), having at least one radial notch (43) designed to alternately interact with said shoulders and be axially stopped by a Seger or similar on the rod itself.

The ring can be splined into two different phase angle positions for the opening with a right or left rotation of the rod. The positions are clearly marked (43a) on the notch (43) and by he arrows "L" and "R" on the rod.

Finally, notches (23) of graduated length can be cut into or fitted to the openings (12a,32a) of the movable disk (12,32) so as to interrupt the flow of liquids and reduce the noise of the system (Fig. 4).

## Claims

1. A valve comprising a valve body (13) having lateral slots (13a), a control rod (17) having a handle, a pair of overlapping disks (11, 12;31 ,32) in ceramic or similar materials for the opening and closing the screw type valve, and where a first of said disks (11,31) is fixed inside the valve body (13) and has at least one segment like slot (11a, 31a) closed at the perimeter, the second of said disks (12,32) is movable and rests and rotates onto said first disk and has at least one lateral opening (12a, 32a) which is open both at the bottom towards the fixed disk and radiaily towards the lateral slots (13a) of the valve body, and the second movable disk is connected to said control rod (17) through an intermediate entrainer (16), characterized in that:
- said lateral opening is defined at the top by a curved or parabolic surface (12b) rising from the base approximately at the centre of the movable disk up to the periphery of the same disk;
- a seal (20) is fitted between the entrainer (10) and the control rod (17); and
- said entrainer (16) has two lateral tabs (16a) and a central tab (16b) which engage the movable disk (12;32), at least one of said lateral tabs (16a) having a curved head surface in continuation to the top surface of the corresponding opening (12a, 32a) of the movable disk (12,32).

2. A valve according to claim 1, characterized in that the first, fixed disk (11) has two segment slots (11a) closed at the perimeter and in that the second, movable disk (12) has two opening (12a) which are open both at the bottom towards the fixed disk and radially towards the lateral slots (13a) of the valve body and closed at the top by the curved surface (12b) which rises from the base approximately at the centre of the movable disk.

3. A valve according to claim 2, characterized in that the movable disk (12), viewed from underneath, has an "X" shape with the two openings (12a) alternating with two solid parts, and lateral flattenings (12c) cut in correspondence to said openings.

## Patentansprüche

1. Ventil mit einem mit Seitenschlitzen (13a) versehenen Ventilkörper (13), einem mit einem Griff versehenen Steuerschaft (17), einem übereinanderliegenden Scheibenpaar (11, 12; 31, 32) aus Keramik oder ähnlichem Material zum Öffnen und Schließen durch Verschraubung des Ventils, wobei die erste Scheibe (11, 31) innerhalb des Ventilskörpers (13) fest eingebaut und mit wenigstens einem auf dem Umfang geschlossenen Segmentschlitz (11a, 31a) versehen ist, während die zweite Scheibe (12, 32) beweglich ist und auf der obengenannten ersten Scheibe aufliegt und sich dreht und mit wenigstens einer sowohl auf dem Boden zur festen Scheibe hin als auch radial zu den Seitenschlitzen (13a) hin des Ventilkörpers offenen Seitenöffnung (12a, 32a) versehen ist, wobei diese zweite bewegliche Scheibe mit dem obengenannten Steuerschaft (17) durch ein dazwischenliegendes Mitnehmerelement (16) verbunden ist, dadurch gekennzeichnet, daß:
- die obengenannte Seitenöffnung durch eine krumme bzw. parabolische Fläche (12b) oben abgegrenzt ist, die vom Boden annähernd in der Mitte der beweglichen Scheibe bis zur äußeren Fläche der Scheibe hinaufgeht;
- zwischem dem Mitnehmerelement (16) und dem Steuerschaft (17) eine Dichtung (20) angebracht ist; und
- das obengenannte Mitnehmerelement (16) mit zwei Seitenrippen (16a) und mit einer zentralen Rippe (16b) versehen ist, die auf die bewegliche Scheibe (12, 32) einwirken, wobei wenigstens eine der obengenannten Seitenrippen (16a) mit einer krummen Kopffläche als Fortsetzung der oberen Fläche der entsprechenden Öffnung (12a; 32a) der beweglichen Scheibe (12, 32) versehen ist.

2. Ventil nach Anspruch 1, dadurch gekennzeichnet, daß die erste feste Scheibe (11) mit zwei auf dem Umfang geschlossenen Segmentschlitzen (11a) und die zweite bewegliche Scheibe (12) mit zwei Öffnungen (12a) versehen ist, die auf dem Boden zur festen Scheibe hin und radial zu den Seitenschlitzen (13a) hin des Ventilkörpers offen und oben durch die krumme Fläche (12b) geschlossen sind, die von dem Boden annähernd in der Mitte der beweglichen Scheibe hinaufgeht.

3. Ventil nach Anspruch 2, dadurch gekennzeichnet, daß die bewegliche Scheibe (12), von unten gesehen, X-förmig mit den zwei Öffnungen (12a) in Abwechslung mit zwei vollen Teilen und mit im Bereich dieser Öffnungen geschnittenen flachen Teilen (12c) ausgebildet ist.

## Revendications

1. Une valve comprenant un corps de valve (13) ayant des fissures latérales (13a), une tige de contrôle (17) munie d'un bouton, un couple de plateaux superposés 11, 12, 31, 32) en céramique ou matériel similaire pour l'ouverture et la fermeture de la valve par vissage, dont le premier plateau (11, 31) est fixe à l'intérieur du corps de la valve (13) et est muni au moins d'une fissure à segment (11a, 31a) fermée le long du périmètre, tandis que le deuxième plateau (12, 32) est mobile et repose et tourne sur le susdit premier plateau, et est muni d'au moins une ouverture latérale (12a, 32a) ouverte tant sur le fond vers le plateau fixe qu'en étoile vers les fissures latérales (13a) du corps de la valve, et le susdit deuxième plateau mobile est relié à la susdite tige de contrôle (17) au moyen d'un élément d'entraînement intermédiaire (16), caractérisée par le fait que:
- la susdite ouverture latérale est délimitée dans la partie supérieure par une surface courbe ou parabolique (12b) remontant de la base approximativement vers le centre du plateau mobile jusqu'à la surface extérieure de celui-ci;
- entre l'élément d'entraînement (16) et la tige de contrôle (17) il y a un joint d'étanchéité (20); et
- le susdit élément d'entraînement (16) est muni de deux ailettes latérales (16a) et d'une ailette centrale (16b) aptes à engager le plateau mobile (12; 32). puisqu'au moins l'une des susdites ailettes latérales est pourvue d'une surface de tête recourbée dans la poursuite de la surface supérieure de l'ouverture correspondante (12a; 32a) du plateau mobile (12, 32).

2. Valve selon la revendication 1, caractérisée par le fait que le premier plateau fixe (11) est muni de deux fissures à segment (11a) fermées le long du périmètre, et que le deuxième plateau mobile (12) est muni de deux ouvertures (12a) ouvertes tant sur le fond, vers le plateau fixe, qu'en étoile, vers les fissures latérales (13a) du corps de valve, et fermées dans la partie supérieure par la surface recourbée (12b) qui remonte de la base approximativement vers le centre du plateau mobile.

3. Valve selon la revendication 2, caractérisée par le fait que le plateau mobile (2), vu d'en bas, a la forme d'une "X" avec ses deux ouvertures (12a) alternées à deux parties dans l'espace et des parties planes (12c) coupées près des susdites ouvertures.
